# EUROPEAN PATENT APPLICATION

(11) **EP 2 680 633 A1**
(43) Date of publication of application: **01.01.2014**
(21) Application number: 12749322.9
(22) Date of filing: 31.01.2012
(51) Int. Cl.: H04W 24/00, H04M 3/36, G06Q 10/00, G06Q 50/00

(54) **DATA PROCESSING METHOD AND DEVICE FOR ESSENTIAL FACTOR LOST SCORE**

(30) Priority: 24.02.2011 CN 201110044494
(71) Applicant: Datang Mobile Communications Equipment Co., Ltd., Beijing 100083 (CN)
(72) Inventor: XU, Hongyan, Haidian District Beijing 100083 (CN); CAO, Yanxia, Haidian District Beijing 100083 (CN); KANG, Shaoli, Haidian District Beijing 100083 (CN)
(74) Representative: Modiano, Micaela Nadia
(86) International application number: PCT/CN2012/070801
(87) International publication number: WO 2012/113279

(57) **Abstract**

Disclosed are a data processing method and device for an essential factor lost score. The method comprises: determining, according to a representative KPI lost score, contributions of a representative KPI to a QoE lost score; searching the correspondence between the representative KPI and essential factors, and determining contributions of the essential factors, corresponding to the representative KPI, to the QoE lost score; making statistics on contributions of essential factors, corresponding to all representative KPI lost scores, to the QoE lost score; and summating the contributions of the same essential factor to the QoE lost score, so as to obtain the lost score of the same essential factor. In the embodiments of the present invention, the contributions of the essential factors, corresponding to the representative KPI, to the QoE lost score are determined according to the representative KPI lost score, thereby obtaining the essential factor lost score, thus implementing responsibility allocation of the user perception evaluation result.

## Description

This application requires the priority to Chinese patent application, which should be submitted to the Chinese Patent Office on February 24, 2011, the application No. 201110044494.X, invention name as "Data Processing Method and Device for Essential Factor Lost Score".

### Field of the Present Invention

The present invention relates to the field of communication, in particular to the data processing method and device for an essential factor lost score.

### Background of the Present Invention

With the rapid growth of users in communication market, competition among communication operators is becoming more and more fierce; for mature telecom operators, in addition to caring for stable operation of their networks, how to improve user satisfaction, lower churn rate and dig user's potential value and profit growth point has become a key to keeping competitive advantage and fighting for future market leadership. Most of the current network evaluation systems are based on KPI (Key Performance Indicators) analysis on network elements; KPI analysis system obtains call drop times, speech quality parameters, short message receiving success rate, mean short message sending duration, calling access failure rate and many other data, performs analysis and calculation on these data, evaluates network quality, analyzes network fault and normalizes operation management of the network.

KPI analysis system can obtain user perception evaluation result, however, there is no responsibility allocation of the user perception evaluation result in the prior art and responsibility allocation is not provided for lost score in the evaluation result, which go against positioning questions relating to user perception.

### Summary of the Present Invention

The embodiments of the present invention provide a data processing method and device for an essential factor lost score, thus implementing responsibility allocation of the user perception evaluation result.

The embodiments of the present invention provide a data processing method for an essential factor lost score, which comprises:
Determining, according to a representative KPI lost score, contributions of a representative KPI to a QoE lost score;
Searching the correspondence between the representative KPI and essential factors, and determining contributions of the essential factors, corresponding to the representative KPI, to the QoE lost score;
Making statistics on contributions of essential factors, corresponding to all representative KPI lost scores, to the QoE lost score;
Summating the contributions of the same essential factor to the QoE lost score, so as to obtain the lost score of the same essential factor.

The embodiments of the present invention provide a data processing device for an essential factor lost score, which comprises:
Processing unit, which is used for determining, according to representative KPI lost score, contributions of a representative KPI to a QoE lost score; searching the correspondence between the representative KPI and essential factors, and
determining contributions of the essential factors, corresponding to the representative KPI, to the QoE lost score;

Statistics unit, which is used for making statistics on contributions of essential factors, corresponding to all representative KPI lost scores, to the QoE lost score; Summating unit, which is used for summating the contributions of the same essential factor to the QoE lost score, so as to obtain the lost score of the same essential factor. Compared with the prior art, the embodiments of the present invention at least have the following advantages:
In the embodiments of the present invention, the contributions of the essential factors, corresponding to the representative KPI, to the QoE lost score are determined according to the representative KPI lost score, thereby obtaining the essential factor lost score, thus implementing responsibility allocation of the user perception evaluation result.

### Brief Description of the Drawings

Fig. 1 is the schematic diagram of user perception evaluation system in the prior art;
Fig. 2 is the architecture diagram of responsibility allocation of the user perception evaluation result provided in the embodiments of the present invention;
Fig. 3 is the flow diagram of a data processing method for an essential factor lost score provided in the embodiments of the present invention;
Fig. 4 is the schematic diagram of determining mode for responsibility proportion of essential factor with voice service as example in the embodiments of the present invention;
Fig. 5 to Fig. 7 are the structure diagrams of a data processing device for an essential factor lost score in the embodiments of the present invention.

### Detailed Description of the Embodiments of the Present Invention

The technical solution of the embodiments of the present invention will be described clearly and completely in combination with the drawings in the embodiments of the present invention. It is clear that the embodiments described here are only parts of the embodiments of the present invention. According to the embodiments of the present invention, any other embodiments made by technical personnel of the field in the absence of creative work all belong to the scope of the patent protection of the invention.

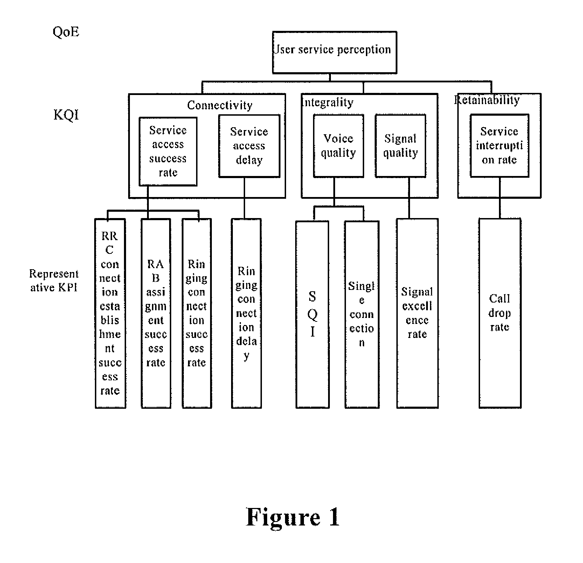

User perception evaluation system is shown in Fig. 1, real user perception is obtained in a layer-by-layer mapping mode of relevant data-representative KPI-KQI (Key Quality Indicators) -QoE (Quality of Experience). Specific method is as below:
firstly, all representative KPI scores are obtained according to calculation on data relating to the bottom layer; KQI scores, corresponding to the upper layer, are obtained by multiplying and summating all representative KQI scores and the weight; partial scores of user perception in some respects can be obtained according to KQI and its weight, and the final QoE score of user perception is obtained according to these partial QoE scores and weight thereof.

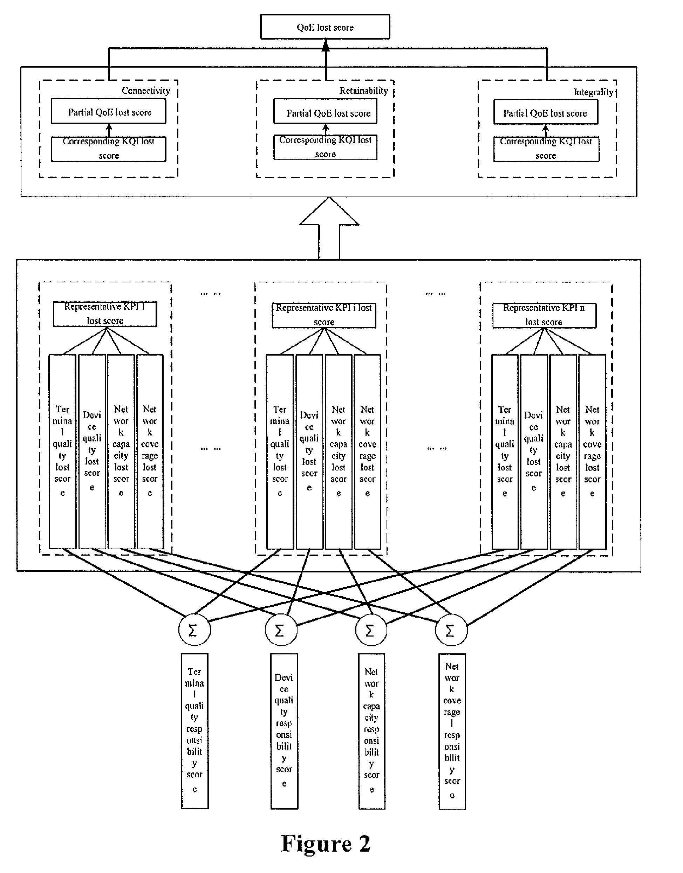

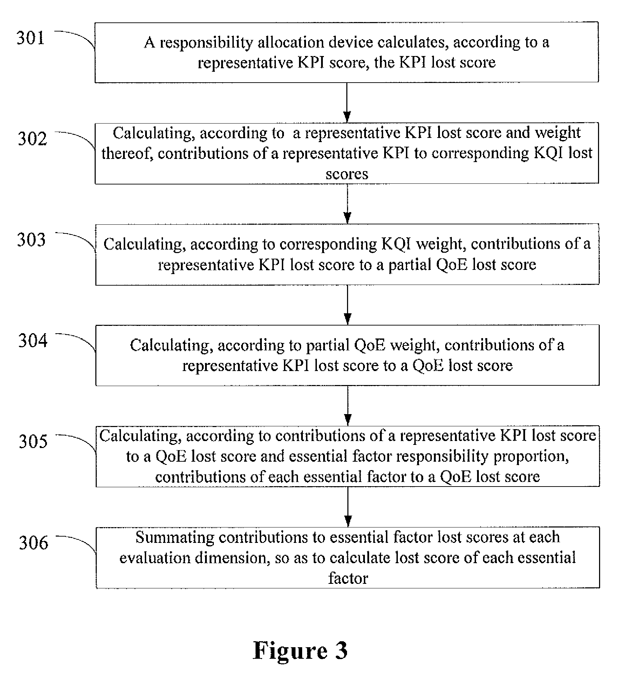

The embodiments of the present invention provide an architecture for responsibility allocation of the user perception evaluation result. As shown in Fig. 2, voice service evaluation system is taken as example in the architecture. In combination with the architecture in Fig. 2, the data processing method for an essential factor lost score, as shown in Fig. 3, comprises the following steps:
Step 301, a responsibility allocation device calculates, according to a representative KPI score, the KPI lost score.

To be specific, representative KPI lost score is: representative KPI lost score = representative KPI full score - representative KPI score.

In this step, the responsibility allocation device needs to obtain all representative KPI lost scores, viz. lost scores of representative KPI 1 to representative KPI n as shown in Fig. 2.

Step 302, calculating, according to a representative KPI lost score and weight thereof, contributions of the representative KPI to corresponding KQI lost scores.

To be specific, contributions to corresponding KQI lost score = representative KPI lost score * x. Wherein, x represents weight of the contributions of a representative KPI to corresponding KQI lost score, and the weight is consistent with that of the KPI in calculating corresponding KQI score.

Step 303, calculating, according to corresponding KQI weight, contributions of a representative KPI lost score to a partial QoE lost score.

To be specific, contributions to partial QoE lost score = representative KPI lost score * x * y. Wherein, x represents weight of the contributions of a representative KPI to corresponding KQI lost score, and the weight is consistent with that of the KPI in calculating corresponding KQI score; y represents weight of the contributions of corresponding KQI to a partial QoE lost score, and it is consistent with that of corresponding KQI in calculating the partial QoE score.

Step 304, calculating, according to a partial QoE weight, contributions of a representative KPI lost score to a QoE lost score.

To be specific, contributions to QoE lost score = representative KPI lost score * x * y * z. Wherein, x represents weight of the contributions of a representative KPI to corresponding KQI lost score, and the weight is consistent with that of the KPI in calculating corresponding KQI score; y represents weight of the contributions of corresponding KQI to a partial QoE lost score, and it is consistent with that of corresponding KQI in calculating the partial QoE score; z represents weight of the contributions of corresponding partial QoE to a QoE lost score, and it is consistent with that of corresponding KQI in calculating the partial QoE score.

Through this step, the responsibility allocation device obtains contributions of each KPI lost score to a QoE lost score respectively. In combination with Fig. 2, the responsibility allocation device obtains contributions of representative KPI 1 to representative KPI n to a QoE lost scores respectively.

Step 305, calculating, according to contributions of a representative KPI lost score to a QoE lost score as well as essential factor responsibility proportion, contributions of each essential factor to a QoE lost score.

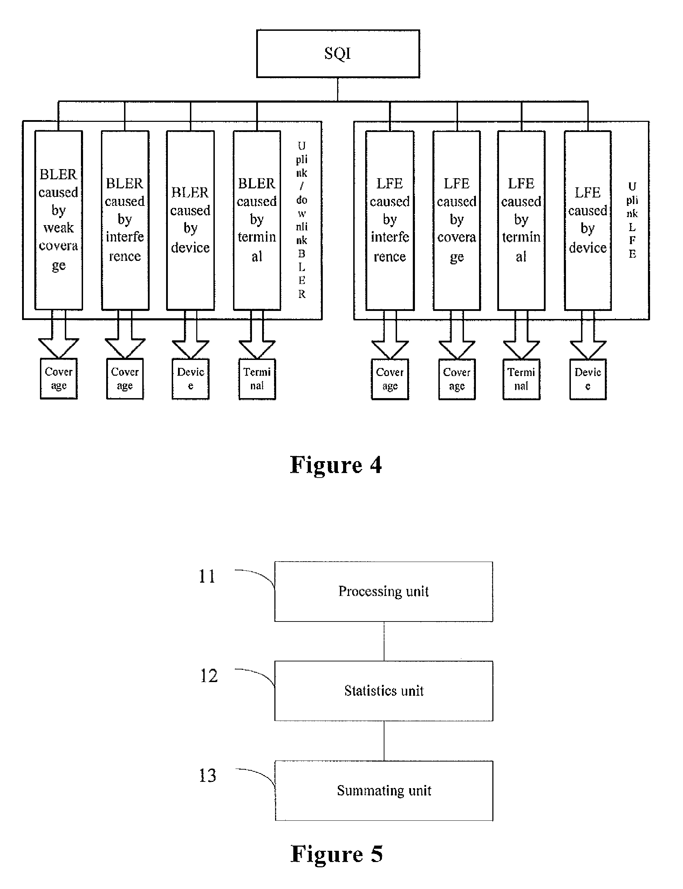

To be specific, contributions to an essential factor lost score = representative KPI lost score * x * y z * responsibility proportion. Wherein, x represents weight of the contributions of a representative KPI to corresponding KQI lost score, and the weight is consistent with that of the KPI in calculating corresponding KQI score; y represents weight of the contributions of corresponding KQI to a partial QoE lost score, and it is consistent with that of the corresponding KQI in calculating the partial QoE score; z represents weight of the contribution of a corresponding partial QoE to a QoE lost score, and it is consistent with that of the corresponding KQI in calculating the partial QoE score. In combination with Fig. 2, contributions of essential factors at each evaluation dimension with regard to each representative KPI lost score are obtained respectively.
Wherein, responsibility proportion of each essential factor is determined in accordance with the following mode:
As shown in Fig. 4, the SQI (Speech Quality Index) of a representative KPI in voice service is taken as example, and responsibility proportion of SQI essential factor is determined in the following mode:
A counter is set for each essential factor, the counter counts according to essential factor quantitative analysis result of a representative KPI, and determines, according to counting result of the counter, responsibility proportion of each essential factor, with the details below:
The first step, the counter counts according to essential factor quantitative analysis result of a representative KPI.

For example, assuming that SQI lost score of a representative KPI is caused by network coverage, count value of the counter for essential factor network coverage is increased by 1, while count values of the rest counters remain the same. When SQI lost score is caused by network coverage and interference, count values of the counters for essential factor network coverage and interference are increased by 1 respectively, while count values of the rest counters remain the same.

The second step, calculate responsibility proportion of each essential factor.

A represents responsibility proportion of an essential factor, Y represents counting result of a counter for an essential factor, Z represents the sum of counting results of counters for all essential factors, so responsibility proportion of the essential factor A =Y/Z.

Wherein, essential factor quantitative analysis on a representative KPI comprises: obtaining all elements which may cause representative KPI lost score, and attributing analysis results of all elements to corresponding essential factors, so as to obtain essential factors causing representative KPI lost scores. For example, as shown in Fig. 4, obtaining all elements which could cause representative KPI lost score, including network signal intensity, network line condition and all elements which may cause representative KPI lost score; then analyzing the elements causing representative KPI lost score, and attributing these elements to essential factors: coverage or terminal. Step 306, summating contributions of essential factor lost scores at each evaluation dimension, so as to calculate lost score of each essential factor.

To be specific, essential factor lost score = summation of contributions of the essential factor to lost score of each dimension.

In combination with Fig. 2, terminal quality responsibility is taken as example, and terminal responsibility score =∑ terminal lost score at each dimension.

In the embodiments of the present invention, the contributions of the essential factors, corresponding to the representative KPI, to the QoE lost score are determined according to the representative KPI lost score, thereby obtaining the essential factor lost score, thus implementing responsibility allocation of the user perception evaluation result.

Based on the same technical concept of the aforementioned method and embodiments, the embodiments of the present invention provide a device embodiment as below. The embodiments of the present invention provide a data processing device for an essential factor lost score as shown in Fig. 5, which comprises:
Processing unit 11, which is used for determining, according to a representative KPI lost score, contributions of a representative KPI to a QoE lost score, searching the correspondence between the representative KPI and essential factors, and determining contributions of the essential factors, corresponding to the representative KPI, to the QoE lost score;
Statistics unit 12, which is used for making statistics on contributions of essential factors, corresponding to all representative KPI lost scores, to the QoE lost score;
Summating unit 13, which is used for summating the contributions of the same essential factor to the QoE lost score, so as to obtain the lost score of the same essential factor.

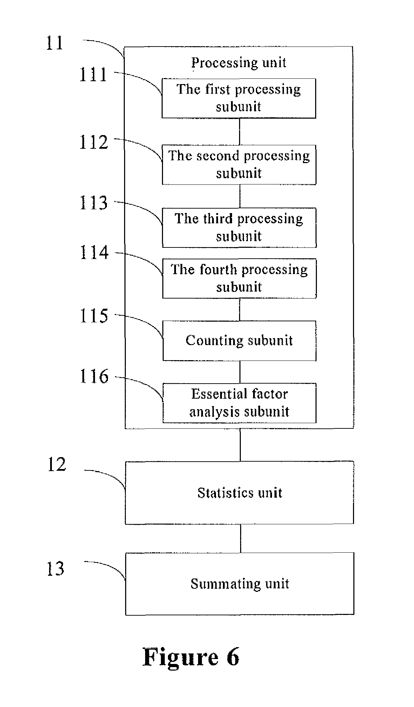

The processing unit 11, as shown in Fig. 6, comprises:
The first processing subunit 111, which is used for determining, according to a representative KPI lost score and weight, contributions of the representative KPI lost score to a KQI lost score;

The second processing subunit 112, which is used for determining, according to contributions of the representative KPI lost score to the KQI lost score and their weight, contributions of the representative KPI lost score to a partial QoE lost score; The third processing subunit 113, which is used for determining, according to contributions of the representative KPI lost score to the partial QoE lost score and their weight, contributions of the representative KPI lost score to a QoE lost score.

The processing unit 11 comprises:
The fourth processing subunit 114, which is used for calculating, according to essential factor responsibility proportion of an essential factor corresponding to the representative KPI, contributions of each essential factor to the QoE lost score.

The processing unit 11 further comprises:
Counting subunit 115, which is used for counting, according to essential factor quantitative analysis result of a representative KPI lost score, essential factors causing the representative KPI lost score; and calculating; according to counting result of essential factors causing each representative KPI lost score, essential factor responsibility proportion.

The processing unit 11 further comprises:
Essential factor analysis subunit 116, which is used for obtaining all elements which could cause the representative KPI lost score, and attributing analysis results of all elements to corresponding essential factors, so as to obtain essential factors causing the representative KPI lost score.

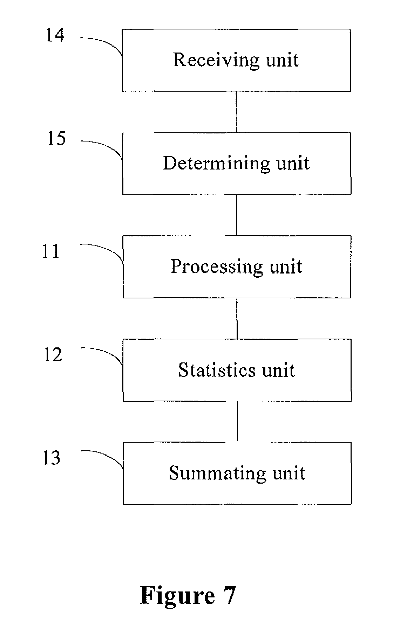

The device as shown in Fig. 7, further comprises:
Receiving unit 14, which is used for receiving a representative KPI score;
Determining unit 15, which is used for determining, according to the representative KPI score, the representative KPI lost score.

In the embodiments of the present invention, the contributions of the essential factors, corresponding to the representative KPI, to the QoE lost score are determined according to the representative KPI lost score, thereby obtaining the essential factor lost score, thus implementing responsibility allocation of the user perception evaluation result.

Through the description of the embodiments above, the technical personnel in this field can understand clearly that the present invention can be implemented by software and necessary general hardware platform or hardware (the former is better in most cases). Based on this understanding, the technical program or the part making contributions to the prior art of the present invention can be embodied by a form of software products essentially which can be stored in a storage medium, including a number of instructions for making a computer device (such as personal computers, servers, or network equipment, etc.) implement the methods described in the embodiments of the present invention.

The technical personnel in this field can be understood that the illustration is only schematic drawings of a preferred embodiment, and the module or process is not necessary for the implementation of the present invention.

The technical personnel in this field can be understood that the modules can be distributed in device of the embodiments according to the description of the embodiments above, and also can be varied in one or multiply device of the embodiments. The modules of the embodiments can be combined into a module, and also can be further split into several sub-modules.

The number of the embodiments is only to describe, it does not represent the pros and cons of the embodiments.

The descriptions above are just preferred implement ways of the present invention. It should be pointed that, for general technical personnel in this field, some improvement and decorating can be done, which should be as the protection scope of the present invention.

## Claims

1. A data processing method for an essential factor lost score, wherein, comprising:
Determining, according to a representative KPI lost score, contributions of a representative KPI to a QoE lost score;
Searching the correspondence between the representative KPI and essential factors,
and determining contributions of the essential factors, corresponding to the representative KPI, to the QoE lost score;
Making statistics on contributions of essential factors, corresponding to all representative KPI lost scores, to the QoE lost score;
Summating the contributions of the same essential factor to the QoE lost score, so as to obtain the lost score of the same essential factor.

2. The method according to claim 1, wherein, said contributions of the representative KPI to the QoE lost score determined according to a representative KPI lost score comprise:
Contributions of the representative KPI lost score to the KQI lost score determined according to a representative KPI lost score and weight thereof;
Contributions of the representative KPI lost score to a partial QoE lost score determined according to contributions of the representative KPI lost score to a KQI lost score and weight thereof;
Contributions of the representative KPI lost score to a QoE lost score determined according to contributions of the representative KPI lost score to a partial QoE lost score and weight thereof.

3. The method according to claim 1, wherein, said determined contributions of an essential factor, corresponding to the representative KPI, to the QoE lost score comprise:
Contributions of each essential factor to the QoE lost score calculated according to essential factor responsibility proportion of an essential factor corresponding to the representative KPI.

4. The method according to claim 3, wherein, the essential factor responsibility proportion is obtained in the following mode:
Setting counters corresponding to all essential factors;
Conducting essential factor quantitative analysis on a representative KPI lost score,
and counting essential factors causing the representative KPI lost score by the counter;
Calculating, according to counting results of all counters, essential factor responsibility proportion of an essential factor.

5. The method according to claim 1, wherein, said essential factor quantitative analysis result on a representative KPI lost score comprises:
Obtaining all elements which could cause the representative KPI lost score;
Attributing analysis results of all elements to corresponding essential factors, so as to obtain essential factors causing the representative KPI lost score.

6. The method according to claim 1, wherein, before said determining contributions of the representative KPI to a QoE lost score according to the representative KPI lost score, comprising:
Receiving the representative KPI score and determining, according to the representative KPI score, the representative KPI lost score.

7. A data processing device for an essential factor lost score, wherein, comprising:
Processing unit, which is used for determining, according to a representative KPI lost score, contributions of a representative KPI to a QoE lost score, searching the correspondence between the representative KPI and essential factors, and
determining contributions of the essential factors, corresponding to the representative KPI, to the QoE lost score;
Statistics unit, which is used for making statistics on contributions of essential factors,
corresponding to all representative KPI lost scores, to the QoE lost score;
Summating unit, which is used for summating the contributions of the same essential factor to the QoE lost score, so as to obtain the lost score of the same essential factor.

8. The device according to claim 7, wherein, said processing unit comprises:
The first processing subunit, which is used for determining, according to a representative KPI lost score and weight, contributions of the representative KPI lost score to a KQI lost score;
The second processing subunit, which is used for determining, according to contributions of the representative KPI lost score to a KQI lost score and weight thereof, contributions of the representative KPI lost score to a partial QoE lost score;
The third processing subunit, which is used for determining, according to contributions of the representative KPI lost score to a partial QoE lost score and weight thereof, contributions of the representative KPI lost score to a QoE lost score.

9. The device according to claim 7, wherein, said processing unit comprises:
The fourth processing subunit, which is used for calculating, according to essential factor responsibility proportion of an essential factor corresponding to the representative KPI, contributions of each essential factor to the QoE lost score.

10. The device according to claim 9, wherein, said processing unit further comprises:
Counting subunit, which is used for counting, according to essential factor quantitative analysis result of a representative KPI lost score, essential factors causing the representative KPI lost score; and calculating, according to counting result of essential factor causing each representative KPI lost score, essential factor responsibility proportion.

11. The device according to claim 9, wherein, said processing unit further comprises:
Essential factor analysis subunit, which is used for obtaining all elements which could cause a representative KPI lost score, and attributing analysis results of all the elements to corresponding essential factors, so as to obtain essential factors causing the representative KPI lost score.

12. The device according to claim 7, wherein, comprising:
Receiving unit, which is used for receiving a representative KPI score;
Determining unit, which is used for determining, according to the representative KPI score, the representative KPI lost score.
